# EUROPÄISCHE PATENTSCHRIFT

(11) **EP 2 837 846 B1**
(45) Veröffentlichungstag und Bekanntmachung des Hinweises auf die Patenterteilung: **23.10.2019**
(21) Anmeldenummer: 14002845.7
(22) Anmeldetag: 14.08.2014
(51) Int. Cl.: F16D 65/00, F16D 66/02

(54) **Kabelhalter**
Cable holder
Support de câble

(30) Priorität: 16.08.2013 DE 102013013688
(43) Veröffentlichungstag der Anmeldung: 18.02.2015
(73) Patentinhaber: KNORR-BREMSE Systeme für Nutzfahrzeuge GmbH, 80809 München (DE)
(72) Erfinder: Buchner, Stefan, 94544 Hofkirchen (DE)

(56) Entgegenhaltungen:
- EP-A1- 0 762 008
- EP-A1- 2 317 196
- WO-A1-98/22739
- WO-A1-2011/018605
- WO-A2-2007/144756
- CN-A- 101 126 469
- DE-A1- 2 633 461
- DE-A1- 3 917 125
- DE-A1- 4 016 273
- DE-U- 7 319 150
- DE-U1-202009 003 801
- FR-A3- 2 770 608
- US-A- 4 869 350

## Beschreibung

Die Erfindung betrifft eine Scheibenbremse nach dem Oberbegriff des Anspruchs 1.

Zur Überwachung der Reibbelagdicke, insbesondere zur Feststellung einer zulässigen Verschleißgrenze des Reibbelages eines Bremsbelages kommen Kontaktleiter in Form von Kabeln zum Einsatz, die bei Erreichen der Verschleißgrenze, also wenn der Reibbelag entsprechend weit abgerieben ist, von der mit dem Reibbelag bei einer Bremsung in Kontakt stehenden Bremsscheibe angeschliffen werden, wodurch ein elektrischer Impuls an einen Signalgeber gegeben wird. Dieser zeigt an, dass die zulässige Verschleißgrenze des Bremsbelages erreicht ist und ein Auswechseln erforderlich wird.

Ein solcher Kontaktleiter, d.h., ein Kabel, ist in einer Halterung geführt, die eingeklemmt in einer Ausnehmung eines Bremsbelages positioniert ist.

Dabei ist das Kabel mittels einer Steckverbindung mit einem Kabelbaum des Fahrzeugs verbunden, wobei ein an das bremsbelagseitige Kabel angeschlossener Stecker an einer definierten Position der Bremse gehalten wird.

Hierzu ist ein stiftförmiger Kabelhalter vorgesehen, der in eine Bohrung des Bremssattels eingesetzt und dort reibschlüssig gehalten ist, sowohl gegen Verdrehen wie auch gegen axiales Verschieben.

Der bekannte Kabelhalter, an dem der Stecker durch Klemmen befestigt ist, besteht aus Metall, insbesondere einem rostfreien Stahl, der im Einsteckbereich in die Bohrung des Bremssattels mit einer Längs-Rändelung versehen ist. Durch Einpressen des Kabelhalters wird ein Form-/Reibschluss erreicht, insbesondere, da sich die Rändelung in die Laibung der Bohrung gewissermaßen einprägt.

Allerdings ist dieser Kabelhalter mit einigen erheblichen Nachteilen behaftet, die einer optimalen Verwendung entgegenstehen.

So besteht der bekannte Kabelhalter aus einem rostfreien Stahl, um den im Fahrbetrieb herrschenden Witterungseinflüssen zu widerstehen. Aufgrund der Materialeigenschaften von rostfreiem Stahl, insbesondere seiner Zähigkeit, ist eine Bearbeitung, namentlich die Einbringung der genannten Längsrillen, nur mit einem erheblichen Aufwand zu bewerkstelligen.

Die einstückige Ausbildung des Kabelhalters erfordert überdies grundsätzlich eine spanende Bearbeitung, mit den sich daraus ergebenden relativ hohen Fertigungskosten.

Der im Wesentlichen wirksame Reibschluss erfordert jedoch eine entsprechend hohe Genauigkeit der Bohrung, in die der Kabelhalter eingesteckt ist, was ebenfalls nur mit einem entsprechenden Fertigungsaufwand erzielt werden kann oder es besteht die Gefahr, dass sich der Kontakthalter aus seiner Position löst, wobei hierzu die im Fahrbetrieb auftretenden Erschütterungen in erheblichem Maße beitragen.

Überdies steht das materialbedingte Gewicht des bekannten Kabelhalters einer stets geforderten Gewichtsoptimierung, gerade auch in Bezug auf eine Scheibenbremse, entgegen.

In der CN 101 126 469 A, der WO 2007/144756 A2, der WO 2011/018605 A1, der EP 2 317 196 A1, der DE 20 2009 003801 U1 sowie der FR 2 770 608 A3 ist jeweils ein Kabelhalter offenbart, mit dem Kabel, Kabelbäume oder Rohrleitungen ortsfest verankerbar sind, beispielsweise im Motorraum eines Fahrzeuges, am Unterboden oder an Wänden.

Aus der DE 40 16 273 A1 ist ein aus einem elastischen Werkstoff wie einem Polyproylen bestehender Kabelhalter bekannt, der als Schutzkappe für einen Führungsbolzen in die Führungsbohrung eines Bremssattels eingesteckt ist. Die EP 0 762 008 A1 thematisiert einen Kabelhalter, der als Halteklip ausgebildet an einem von zwei Haltestiften festgelegt ist, an denen Bremsbeläge verschieblich gehalten sind.

Als Kabelhalter ist in der DE 26 33 461 A1 eine Massehülse gezeigt und beschrieben, die auf einen Gewindebolzen am Bremssattel gesteckt ist. Die DE 39 17 125 A1 schließlich offenbart Kabelhalter, die allerdings, entgegen der Gattung, nicht stiftförmig ausgebildet sind.

Der Erfindung liegt die Aufgabe zugrunde, eine Scheibenbremse der gattungsgemäßen Art so weiterzuentwickeln, dass sie einfacher und kostengünstiger herstellbar ist, und ihre Funktionssicherheit und Verwendbarkeit verbessert wird.

Diese Aufgabe wird durch eine Scheibenbremse mit den Merkmalen des Anspruchs 1 gelöst.

Durch die erfindungsgemäße Ausbildung des Kabelhalters vollständig (oder ggf. jedenfalls abschnittsweise) als Kunststoffteil ergeben sich gegenüber dem Stand der Technik eine ganze Reihe von Vorteilen. Dabei ist der Kabelhalter bevorzugt im Spritzgussverfahren hergestellt, so dass anwendungs- sowie funktionsgemäße Optimierungen ohne weiteres erfüllt werden können.

In vorteilhafter Weise zeichnet sich der neue Kabelhalter u.a. dadurch aus, dass er in seinem Anlageabschnitt mit der Bohrungslaibung durchaus auch Durchmessertoleranzen der Bohrung (der Begriff "Bohrung" umfasst Bohrungen im eigentlichen Sinne aber auch andere Öffnungen) ausgleichen kann, so dass in jedem Fall ein sicherer Halt gewährleistet ist. Dies auch in dem mitunter sehr rauen Betrieb, unter dem Nutzfahrzeuge, in die Scheibenbremsen eingebaut sind, betrieben werden.

Eine spanende Bearbeitung ist durch die Erfindung nicht mehr erforderlich, so dass die Herstellung des neuen Kabelhalters gleich einfacher und kostengünstiger als bisher ist.

Vor allem unter dem Gesichtspunkt, dass Scheibenbremsen und damit Kabelhalter als Serienteile in großen Stückzahlen Verwendung finden, kommt diesem Vorteil eine besondere Bedeutung zu.

Hinsichtlich der Optimierung der Verwendbarkeit des neuen Kabelhalters ergibt sich diese aus dem gegenüber einem bisher aus Stahl hergestellten geringeren Gewicht, das in Kombination mit anderen insoweit optimierten Bauteilen dazu beiträgt, dass die Betriebskosten eines Nutzfahrzeuges durch geringeren Kraftstoffverbrauch reduziert werden, der gleichfalls eine Emissionsreduzierung mit sich bringt.

Der Kabelhalter wird durch Reibschluss gegen Verdrehen gesichert, wozu der Anlageabschnitt mit der Bohrungslaibung mit einer umfänglichen Riffelung versehen sein kann, ergänzt durch eine angeformte Spannzunge, die aufgrund der dem Kunststoff innewohnenden Rückstellkräfte die Riffelung gegen die Wandung der Bohrung drückt.

Ergänzend oder alternativ zur Spannzunge kann der Anlageabschnitt von der Stirnseite des Kabelhalters ausgehend über den Durchmesser durchgängig geschlitzt sein, wobei der Durchmesser des Anlageabschnittes vor dem Einpressen in die Bohrung größer ist als deren Durchmesser, so dass die getrennten Schenkel des Anlageabschnitts beim Eintreiben in die Bohrung zusammengepresst werden, unter Erzeugung einer Spreizkraft, mit der der erforderliche Reibschluss hergestellt wird.

Eine Verschiebesicherung wird durch Formschluss geschaffen, wozu beidseitig des Anlageabschnitts Formschlusselemente angeformt sind.

Diese können im Sinne von Keilelementen ausgebildet sein, die beispielsweise am freien Ende des Anlageabschnitts vorgesehen sind und die entgegen der Einschubrichtung des Kabelhalters ansteigende Keilflächen aufweisen, wobei diese Keilelemente am Randbereich der Bohrung anliegen, während gegenüberliegend den Anlageabschnitt begrenzend, vorzugsweise ein Bündchen angeformt ist, das einen Anschlag bildet, um ein Durchstecken des Kabelhalters durch die Bohrung zu verhindern.

Denkbar ist aber auch, solche Keilelemente an beiden Seiten anzubringen.

Um unterschiedliche Bohrungslängen, die sich aus Rohteilschwankungen ergeben, auszugleichen, können mehrere Keilelemente in verschiedenen Höhen vorgesehen sein.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Kabelhalter als Einzelheit in einer perspektivischen Ansicht
- Figur 2: ein weiteres Ausführungsbeispiel des Kabelhalters in montierter Stellung als Teilausschnitt.

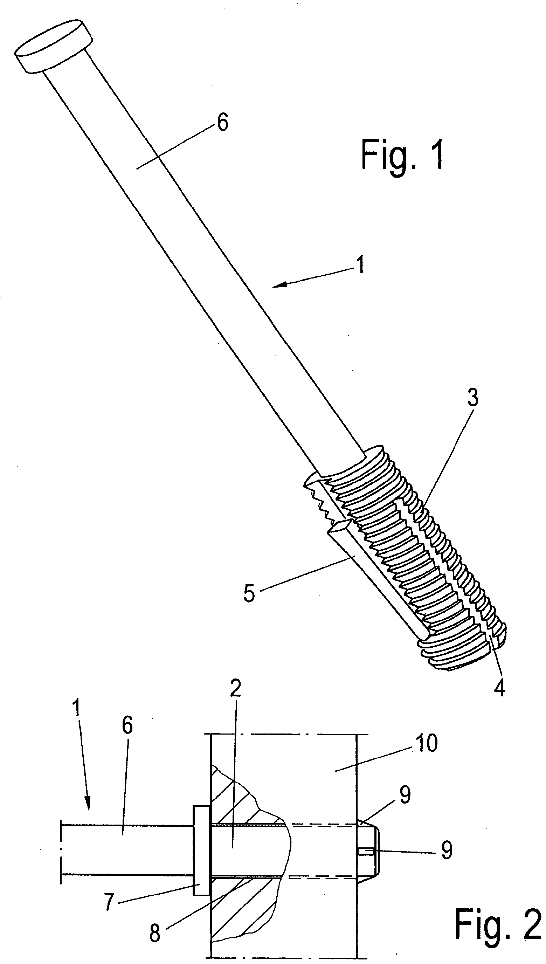

In den Figuren ist ein in einer Bohrung 8 eines Bremssattels 10 einer Scheibenbremse verschiebegesichert gehaltener, stiftförmiger Kabelhalter 1 dargestellt, mit einem Anlageabschnitt 2, der in eine Bohrung 8 des Bremssattels 10 eingesteckt ist, wobei in der Figur 2 lediglich ein Flansch des Bremssattels 10 als Ausschnitt erkennbar ist. Der Begriff der Stiftform ist breit auszulegen und umfasst insbesondere längliche Ausgestaltungen (mit beispielsweise abschnittsweise zylindrischem oder mehreckigem Querschnitt, der kleiner ist als die Längserstreckung).

Erfindungsgemäß ist der Kabelhalter 1 als Kunststoffteil ausgebildet, vorzugsweise im Spritzgussverfahren. Dabei schließt sich an den Anlageabschnitt 2 ein Schaft 6 an, an den ein Kabel einer Verschleißeinrichtung zur Erkennung eines Bremsbelagverschleißes festklemmbar ist.

In dem in der Figur 1 gezeigten Beispiel weist der Anlageabschnitt 2 eine umfängliche Riffelung 3 auf, die eine Vielzahl parallel und abständig zueinander angeordneter, harpunenartig ausgebildeter Stege aufweist.

Im Beispiel ist der Anlageabschnitt 2, ausgehend von der freien Stirnseite über den Durchmesser durchgehend mit einem Längsschlitz 4 versehen, durch den beim Einfügen des Anlageabschnitts 2 in die Bohrung 8 die beiden gebildeten Schenkel zusammengepresst werden, wobei der Durchmesser des Anlageabschnitts 2 vor einem Einschieben in die Bohrung 8 größer ist als der Durchmesser der Bohrung 8, so dass die Schenkel aufgrund der Materialrückstellkräfte gegen die Laibung der Bohrung 8 gepresst werden.

Ergänzend oder alternativ kann im Anlageabschnitt 2 mindestens eine Spannzunge 5 vorgesehen sein, die ebenfalls in eingeschobener Stellung des Kabelhalters 1 in der Bohrung 8 einen Anpressdruck ausübt, durch den der Anlageabschnitt 2 reibschlüssig in der Bohrung 8 gehalten wird.

In der Figur 2 ist ein weiteres Beispiel des Kabelhalters 1 gezeigt, wobei sich die Darstellung im Wesentlichen auf den Anlageabschnitt 2 beschränkt, der in die Bohrung 8 eingesteckt ist.

Zur Verschiebesicherung des Kabelhalters 1 sind im freien, aus dem Bremssattel 10 herausragenden Endbereich des Anlageabschnittes 2 mehrere, über den Umfang verteilte Keilelemente 9 vorgesehen, die beim Einführen des Anlageabschnittes 2 in die Bohrung 8 zusammengedrückt werden und sich nach einem Einführen in ihre Ursprungslage zurückbewegen, unter Anlage am zugeordneten Randbereich der Bohrung 8.

Wie erkennbar, sind die Keilflächen entgegen der Einschieberichtung des Anlageabschnittes 2 ansteigend ausgebildet.

Gegenüberliegend ist ein Anschlagbündchen 7 angeformt, das an der zugeordneten Seite an der Fläche des Bremssattels 10 anliegt, so dass der Kabelhalter 1 in axialer Richtung verschiebegesichert gehalten ist.

## Patentansprüche

1. Scheibenbremse, mit einem Bremssattel (10), in dem in einer Bohrung (8) ein stiftförmig ausgebildeter Kabelhalter (1) verschiebegesichert gehalten ist, **dadurch gekennzeichnet, dass** der Kabelhalter (1) als Kunststoffteil ausgebildet und reibschlüssig verdrehgesichert und formschlüssig verschiebegesichert gehalten ist.

2. Scheibenbremse nach Anspruch 1, **dadurch gekennzeichnet, dass** der Kabelhalter (1) im Spritzgussverfahren hergestellt ist.

3. Scheibenbremse nach Anspruch 1 oder 2, **dadurch gekennzeichnet, dass** ein Anlageabschnitt (2) des Kabelhalters (1) im Überdeckungsbereich mit der Wandung der Bohrung (8) eine umfängliche Riffelung (3) aufweist, wobei eine Vielzahl parallel und abständig zueinander angeordneter, harpunenartig ausgebildeter Stege zur Bildung der Riffelung (3) vorgesehen sind.

4. Scheibenbremse nach Anspruch 3, **dadurch gekennzeichnet, dass** der Anlageabschnitt (2) mindestens einen von der freien Stirnseite her ausgehenden Längsschlitz (4) aufweist.

5. Scheibenbremse nach Anspruch 4, **dadurch gekennzeichnet, dass** der Längsschlitz (4) sich über den Durchmesser des Anlageabschnitts (2) erstreckt.

6. Scheibenbremse nach einem der Ansprüche 3 bis 5, **dadurch gekennzeichnet, dass** der Durchmesser des Anlageabschnittes (2) in unmontierter Stellung des Kabelhalters (1) größer ist als der Durchmesser der Bohrung (8).

7. Scheibenbremse nach einem der Ansprüche 3 bis 6, **dadurch gekennzeichnet, dass** der Anlageabschnitt (2) mindestens eine Spannzunge (5) aufweist, mit der der Anlageabschnitt (2) an die Laibung der Bohrung (8) pressbar ist.

8. Scheibenbremse nach einem der Ansprüche 3 bis 7, **dadurch gekennzeichnet, dass** in Fortsetzung des Anlageabschnitts (2) hin zur freien Stirnseite Keilelemente (9) vorgesehen sind, die im zugeordneten rückwärtigen Randbereich der Bohrung (8) anliegen.

9. Scheibenbremse nach Anspruch 8, **dadurch gekennzeichnet, dass** die Keilelemente (9) eine in Einschieberichtung des Kabelhalters (1) abfallende Keilschräge aufweisen.

10. Scheibenbremse nach einem der Ansprüche 8 oder 9, **dadurch gekennzeichnet, dass** mehrere Keilelemente (9) in unterschiedlichen Höhen vorgesehen sind.

11. Scheibenbremse nach einem Ansprüche 8 bis 10, **dadurch gekennzeichnet, dass** den Keilelementen (9) gegenüberliegend Anlageelemente angeformt sind.

12. Scheibenbremse nach Anspruch 11, **dadurch gekennzeichnet, dass** die Anlageelemente aus einem Anlagebündchen (7) oder aus Keilelementen (9) bestehen.

## Claims

1. Disc brake, with a brake caliper (10), in which a rod-shaped cable holder (1) is held in a bore (8) secured against displacement, **characterised in that** the cable holder (1) is in the form of a plastic component and is held secured against rotation by friction and secured against displacement by interlock.

2. Disc brake according to Claim 1, **characterised in that** the cable holder (1) is produced by injection moulding.

3. Disc brake according to Claims 1 or 2, **characterised in that** in the overlap area with the wall of the bore (8) a contact section (2) of the cable holder (1) has all-round corrugations (3), such that a plurality of parallel, harpoon-like webs spaced apart are provided to form the corrugations (3).

4. Disc brake according to Claim 3, **characterised in that** the said contact section (2) has at least one elongated slot (4) that starts at the free end.

5. Disc brake according to Claim 4, **characterised in that** the elongated slot (4) extends over the diameter of the contact section (2).

6. Disc brake according to any of Claims 3 to 5, **characterised in that** in the condition of the cable holder (1) before it is fitted, the diameter of the contact section (2) is larger than the diameter of the bore (8).

7. Disc brake according to any of Claims 3 to 6, **characterised in that** the contact section (2) has at least one clamping jaw (5) by which the contact section (2) can be pressed against the aperture of the bore (8).

8. Disc brake according to any of Claims 3 to 7, **characterised in that** in an extension of the contact section (2) towards the free end, wedge elements (9) are provided which make contact with the associated rear edge area of the bore (8).

9. Disc brake according to Claim 8, **characterised in that** the wedge elements (9) have a wedge height that decreases in the direction in which the cable holder (1) is pushed in.

10. Disc brake according to either of Claims 8 or 9, **characterised in that** a plurality of wedge elements (9) are provided at various levels.

11. Disc brake according to any of Claims 8 to 10, **characterised in that** opposite the wedge elements (9) contact elements are formed.

12. Disc brake according to Claim 11, **characterised in that** the contact elements consist of a narrow contact flange (7) or of wedge elements (9).

## Revendications

1. Frein à disque, comprenant un étrier (10) de frein, dans lequel un support (1) de câble, constitué en forme de tige, est retenu sans pouvoir coulisser dans un trou (8), **caractérisé en ce que** le support (1) de câble est sous la forme d'une partie en matière plastique et est retenu par coopération de frottement sans pouvoir se tordre et par complémentarité de forme sans pouvoir se déplacer.

2. Frein à disque suivant la revendication 1, **caractérisé en ce que** le support (1) de câble est fabriqué par un procédé de moulage par injection.

3. Frein à disque suivant la revendication 1 ou 2, **caractérisé en ce qu'**une partie de contact du support (1) de câble a, dans une région de recouvrement avec la paroi du trou (8), un striage (3) sur le pourtour, une pluralité de nervures, constituées à la manière d'un harpon, disposées en parallèle et à distance les unes des autres, étant prévues pour former le striage (3).

4. Frein à disque suivant la revendication 3,
**caractérisé en ce que** la partie de contact a au moins une fente (4) longitudinale issue du côté frontal libre.

5. Frein à disque suivant la revendication 4,
**caractérisé en ce que** la fente (4) longitudinale s'étend sur le diamètre de la partie (2) de contact.

6. Frein à disque suivant l'une des revendications 3 à 5,
**caractérisé en ce que** le diamètre de la partie (2) de contact est, dans la position non montée du support (1) de câble, plus grand que le diamètre du trou (8).

7. Frein à disque suivant l'une des revendications 3 à 6,
**caractérisé en ce que** la partie (2) de contact a au moins une languette (5) de serrage, par laquelle la partie (2) de contact peut être pressée sur la surface latérale du trou (8).

8. Frein à disque suivant l'une des revendications 3 à 7,
**caractérisé en ce que**, dans le prolongement de la partie (2) de contact, vers le côté frontal libre, sont prévus des éléments (9) de coin, qui s'appliquent à la partie de bord associée du côté vers l'arrière du trou (8).

9. Frein à disque suivant la revendication 8,
**caractérisé en ce que** les éléments (9) de coin ont un biseau de coin descendant dans la direction d'introduction du support (1) de câble.

10. Frein à disque suivant l'une des revendication 8 ou 9,
**caractérisé en ce qu'**il est prévu plusieurs éléments (9) de coin à des niveaux différents.

11. Frein à disque suivant l'une des revendications 8 à 10,
**caractérisé en ce qu'**il est formé des éléments de contact opposés aux éléments (9) de coin.

12. Frein à disque suivant la revendication 11,
**caractérisé en ce que** les éléments de contact sont constitués d'une collerette (7) de contact ou d'éléments (9) de coin.
